# EUROPEAN PATENT APPLICATION

(11) **EP 2 505 393 A1**
(43) Date of publication of application: **03.10.2012**
(21) Application number: 12161158.6
(22) Date of filing: 26.03.2012
(51) Int. Cl.: B60H 1/00

(54) **Vehicle air conditioner**

(30) Priority: 31.03.2011 JP 2011080254
(71) Applicant: Kabushiki Kaisha Toyota Jidoshokki, Kariya-shi, Aichi 448-8671 (JP)
(72) Inventor: Murase, Masakazu, Kariya-shi, Aichi 448-8671 (JP); Yokomachi, Naoya, Kariya-shi, Aichi 448-8671 (JP); Kato, Hirohisa, Kariya-shi, Aichi 448-8671 (JP); Akiyama, Hirokuni, Kariya-shi, Aichi 448-8671 (JP); Nakamura, Norihiko, Kariya-shi, Aichi 448-8671 (JP)
(74) Representative: TBK

(57) **Abstract**

A vehicle air conditioner includes a thermoelectric conversion module (3), a first heat exchanger (5), a second heat exchanger (7), a first air-conditioning heat exchanger (9) , a second air-conditioning heat exchanger (11), a radiator (13), a first circuit (10) connecting the first heat exchanger and the first air-conditioning heat exchanger and a second circuit connecting the second heat exchanger, the second air-conditioning heat exchanger and the radiator. The second circuit includes a bypass passage (21) that bypasses the second air-conditioning heat exchanger and a first switching device (23) switching selectively between a first position where heat exchange medium flows through the bypass passage without allowing the heat exchange medium to flow through the second air-conditioning heat exchanger and a second position where the heat exchange medium flows through the second air-conditioning heat exchanger.

## Description

### BACKGROUND OF THE INVENTION

The present invention relates to a vehicle air conditioner.

Japanese Patent Application Publication H10-35268 discloses a vehicle air conditioner that includes a waste heat recovery device, a radiator, a thermoelectric conversion module having a first surface and a second surface, a first heat exchanger on the first surface of the thermoelectric conversion module, a second heat exchanger on the second surface of thermoelectric conversion module, and a circuit through which water can circulate on the second heat exchanger side.

The waste heat recovery device recovers waste heat generated by a motor and the like for driving a vehicle. The thermoelectric conversion module is operable to make the first and the second surfaces to change between the heat absorption side and the heat release side. The waste heat recovery device, the radiator and the second heat exchanger are connected in the circuit.

The above vehicle air conditioner air-conditions the vehicle compartment room by switching the thermoelectric conversion module between the heat release side and the heat absorption side and also by changing the connections in the circuit.

In heating the compartment room, the first surface of the thermoelectric conversion is set for the heat release side and the second surface for the heat absorption side, respectively. Furthermore, the waste heat recovery device and the second heat exchanger are connected with each other, and the radiator is disconnected from the waste heat recovery device and the second heat exchanger. In this state of the air conditioner, water in the circuit is heated by the heat in the waste heat recovery device. The heat of water is absorbed by the second surface of the thermoelectric conversion module in the second heat exchanger and the absorbed heat is released into atmosphere in the first heat exchanger. Air heated by the released heat is supplied into the compartment room thereby to heat the compartment room.

In cooling the compartment room, on the other hand, the first surface of the thermoelectric conversion module is set for the heat absorption side and the second surface for the heat release side, respectively. The radiator is connected with the second heat exchanger, and the waste heat recovery device is disconnected from the radiator and the second heat exchanger. Therefore, heat of the air around the first heat exchanger is absorbed by the first surface of the thermoelectric conversion module, so that the surrounding of the first heat exchanger is cooled. The cooled air is supplied into the compartment room thereby to cool the compartment room. Water heated by the heat released from the second surface of the thermoelectric conversion module is cooled in the radiator by heat exchange with air outside the compartment room.

When heat in the air is absorbed by the thermoelectric conversion module for cooling, the humidity of the cooled air is decreased. The cooled air may be supplied to the compartment room so as to dehumidify the air in the compartment room. However, the air in the compartment room is cooled. Therefore, when the compartment room is dehumidified by the above air conditioner under a cold environment, the heating of the compartment room may be affected.

To solve the above problem, a vehicle air conditioner may be provided which has two sets of thermoelectric conversion module, first and second heat exchangers, wherein air is dehumidified and cooled by one of the first heat exchangers of the two sets and the dehumidified air is heated again in the first heat exchanger of the other set.

In such an air conditioner, however, the number of the thermoelectric conversion modules and the second heat exchangers is increased and, moreover, the respective second heat exchangers need be connected to the waste heat recovery device and the radiator, so that the circuit on the second heat exchanger side becomes complicated. Therefore, the structure of the vehicle air conditioner becomes complicated and the manufacturing cost thereof will increase.

The present invention is directed to providing a vehicle air conditioner which provides a comfortable air-conditioning of a compartment room and allows to reduce its manufacturing cost.

### SUMMARY OF THE INVENTION

A vehicle air conditioner includes a thermoelectric conversion module, a first heat exchanger, a second heat exchanger, a first air-conditioning heat exchanger, a second air-conditioning heat exchanger, a radiator, a first circuit connecting the first heat exchanger and the first air-conditioning heat exchanger and a second circuit connecting the second heat exchanger, the second air-conditioning heat exchanger and the radiator. The second circuit includes a bypass passage that bypasses the second air-conditioning heat exchanger and a first switching device switching selectively between a first position where heat exchange medium flows through the bypass passage without allowing the heat exchange medium to flow through the second air-conditioning heat exchanger and a second position where the heat exchange medium flows through the second air-conditioning heat exchanger.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
FIG. 1 is a schematic configuration diagram showing a vehicle air conditioner according to a preferred embodiment of the present invention;
FIG. 2 is a schematic configuration diagram of the vehicle air conditioner of FIG. 1, showing a state of the vehicle air conditioner while heating a vehicle compartment room;
FIG. 3 is a schematic configuration diagram of the vehicle air conditioner of FIG. 1, showing another state of the vehicle air conditioner while heating the compartment room;
FIG. 4 is a schematic configuration diagram of the vehicle air conditioner of FIG. 1, showing a state of the vehicle air conditioner while cooling the compartment room; and
FIG. 5 is a schematic configuration diagram of the vehicle air conditioner of FIG. 1, showing a state of the vehicle air conditioner while dehumidifying and heating the compartment room.

### DETAILED DESCRIPTION OF THE PREFERRED EMBODIMENT

The following will describe the vehicle air conditioner according to the preferred embodiment of the present invention with reference to the accompanying drawings. The vehicle air conditioner for heating, cooling and dehumidifying the compartment room indicated by CR is mounted on a vehicle. In the present invention, the compartment room CR is not limited to a vehicle interior for passengers. It is noted that the term compartment room used herein means a space of a vehicle for passengers separated by any wall or the like from the engine compartment EC.

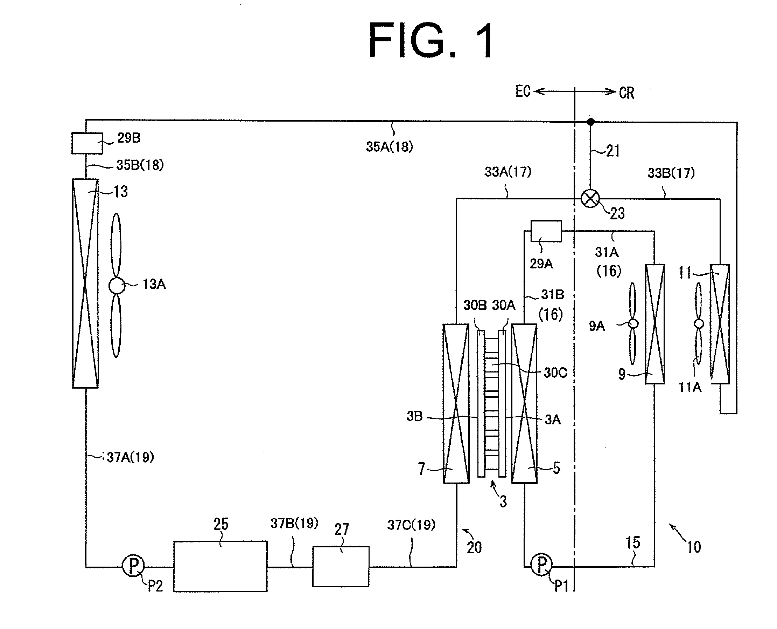

As shown in FIG. 1, the vehicle air conditioner includes a thermoelectric conversion module 3, a first heat exchanger 5, a second heat exchanger 7, a first air-conditioning heat exchanger 9, a second air-conditioning heat exchanger 11, a radiator 13, a first circuit 10 including first and second passages 15, 16, and a second circuit 20 including third, fourth and fifth passages 17 through 19. A bypass passage 21, a three-way valve 23, a motor 25 and a power control unit PCU 27 are provided in the second circuit 20.

The thermoelectric conversion module 3 includes a pair of substrates 30A, 30B forming a first surface 3A and a second surface 3B of the thermoelectric conversion module 3, respectively, and a plurality of thermoelectric conversion elements 30C that are held between the substrates 30A, 30B and electrically connected to electrodes provided in respective substrates 30A, 30B. The structure of the thermoelectric conversion module 3 is substantially the same as that of known thermoelectric conversion modules and, therefore, the description of the structure thereof will be omitted. The electrodes of the thermoelectric conversion module 3 are omitted from the illustration in FIG. 1 and FIGS. 2 through 5.

Referring to FIG. 1, each thermoelectric conversion element 30C of the thermoelectric conversion module 3 is electrically connected to a control device (not shown) through the electrode. The thermoelectric conversion module 3 is operable to switch between heat absorption by the first surface 3A and heat release by the second surface 3B by controllably reversing the flowing direction of the electric current applied to the thermoelectric conversion elements 30C. The control device is electrically connected to a battery (not shown) mounted on the vehicle.

The first heat exchanger 5 is provided on the first surface 3A side of the thermoelectric conversion module 3 and configured so that water as heat exchange medium flows through the first heat exchanger 5. The second heat exchanger 7 is provided on the second surface 3B side of the thermoelectric conversion module 3 and configured so that that water flows through the second heat exchanger 7. The thermoelectric conversion module 3 and the first and the second heat exchangers 5, 7 are provided in the engine compartment EC that is separate from the compartment room CR. Coolant such as long life coolant LLC other than water or gas such as air may be used as heat exchange medium.

The first air-conditioning heat exchanger 9 and the second air-conditioning heat exchanger 11 are disposed in the compartment room CR. Water flows through the first air-conditioning heat exchanger 9 and the second air-conditioning heat exchanger 11, respectively, and heat exchange occurs between the water in the first air-conditioning heat exchanger 9 and the air in the compartment room CR and also between the water in the second air-conditioning heat exchanger 11 and the air in the compartment room CR. Electric fans 9A, 11A are provided for the first and the second air-conditioning heat exchangers 9, 11, respectively. These electric fans 9A, 11A are electrically connected to the control device (not shown).

The radiator 13 is disposed in the engine compartment EC. Water flows through the radiator and heat exchange takes place between the water in the radiator 13 and the air outside the compartment room CR. An electric fan 13A is provided adjacent to the radiator 13 and electrically connected to the control device (not shown).

The motor 25 and the power control unit PCU 27 are disposed in the engine compartment EC and function as the drive source of the vehicle. The power control unit PCU 27, i.e. a drive device for driving the motor 25, includes a known inverter or a known converter and is electrically connected to the control device (not shown). The motor 25 and the power control unit PCU 27 have formed therein water jackets (not shown) through which water flows so as to cool the motor 25 and the power control unit PCU 27. An engine may be used as the power source instead of the motor 25 and the power control unit PCU 27 or a combination of the motor 25, the power control unit PCU 27 and an engine may serve as the drive source.

The first heat exchanger 5 and the first air-conditioning heat exchanger 9 are connected through the first circuit 10. The first circuit 10 includes the aforementioned first passage 15 extending from the first heat exchanger 5 to the first air-conditioning heat exchanger 9 and the second passage 16 extending from the first air-conditioning heat exchanger 9 to the first heat exchanger 5. Water flows through the first and the second passages 15, 16. The second passage 16 includes a reservoir 29A storing therein water, a passage 31A extending from the first air-conditioning heat exchanger 9 to the reservoir 29A and a passage 31B extending from the reservoir 29A to the first heat exchanger 5. A first electric pump P1 is provided in the first passage 15 and electrically connected to the control device (not shown). As shown in FIG. 1, the first electric pump P1 is disposed in the engine compartment EC. The reservoir 29A is also disposed in the engine compartment EC. Alternatively, the reservoir 29A may be provided in the first passage 15 and the first electric pump P1 may be provided in the second passage 16.

The second heat exchanger 7, the second air-conditioning heat exchanger 11, the radiator 13, the motor 25 and the power control unit PCU 27 are connected in series in the second circuit 20. The second circuit 20 includes a third passage 17 extending from the second heat exchanger 7 to the second air-conditioning heat exchanger 11, a fourth passage 18 extending from the second air-conditioning heat exchanger 11 to the radiator 13 and a fifth passage 19 extending from the radiator 13 to the second heat exchanger 7 through the motor 25 and the power control unit PCU 27. Water flows through the third through the fifth passages. Athree-way valve 23 is provided in the third passage 17 and a reservoir 29B is provided in the fourth passage 18. In the present embodiment, the three-way valve is provided in the third passage 17 at the connection between the third passage 17 and the bypass passage 21 which bypasses the second air-conditioning heat exchanger 11 and allows an upstream passage to be in communication with one of two downstream passages and to be disconnected from the other one of the two downstream passages. The reservoir 29B storing therein water has substantially the same structure as the reservoir 29A. A second electric pump P2 is provided in the fifth passage 19. The three-way valve 23 and the second electric pump P2 are electrically connected to the control device (not shown) and the second electric pump P2 is operable to change the discharging direction of water as required. The three-way valve 23 is provided in the compartment room CR and the reservoir 29B and the second electric pump P2 are provided in the engine compartment EC. The three-way valve 23 and the second electric pump P2 correspond to the first switching device and the second switching device of the present invention, respectively.

The following will describe the third through the fifth passages 17-19 more in detail. The third passage 17 includes a passage 33A extending from the second heat exchanger 7 to the three-way valve 23 and a passage 33B extending from the three-way valve 23 to the second air-conditioning heat exchanger 11. The fourth passage 18 includes a passage 35A extending from the second air-conditioning heat exchanger 11 to the reservoir 29B and a passage 35B extending from the reservoir 29B to the radiator 13. The fifth passage 19 includes a passage 37A extending from the radiator 13 to the motor 25, a passage 37B extending from the motor 25 to the power control unit PCU 27, and a passage 37C extending from the power control unit PCU 27 to the second heat exchanger 7. In the present embodiment, the second electric pump P2 is provided in the passage 37A. However, the second electric pump P2 may be provided in any one of the passages 37A, 37B and 37C or in some place in the second circuit 20. The reservoir 29B may be provided in either the third passage 17 or the fifth passage 19.

The bypass passage 21 is connected at one end thereof with the three-way valve 23 and at the other end thereof with the passage 35A. In other words, the bypass passage 21 connects the third passage 17 and the fourth passage 18 and bypasses the second air-conditioning heat exchanger 11. In the present embodiment, the three-way valve 23 is provided at the connection between the bypass passage 21 and the third passage 17 in the embodiment. However, the three-way valve 23 may be provided at any connection between the bypass passage 21 and the fourth passage 18.

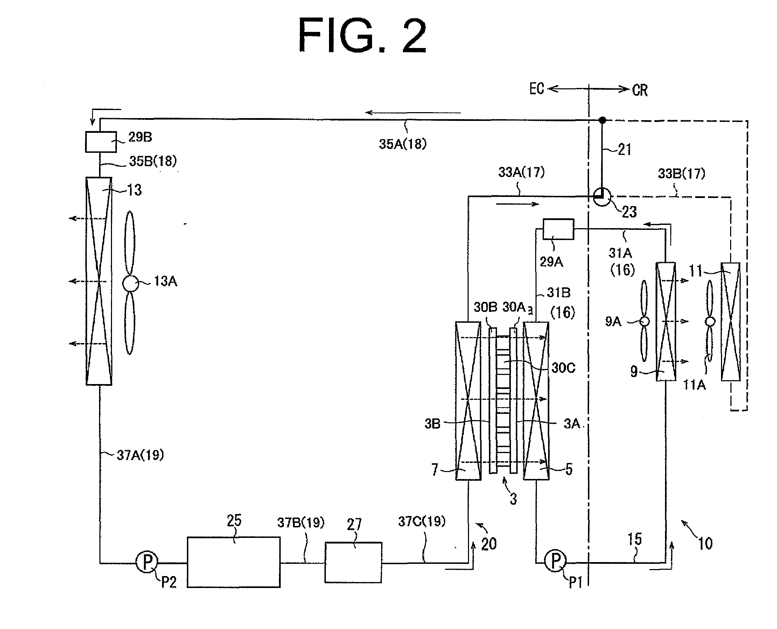

While the motor 25 drives the vehicle, the vehicle air conditioner operates to heat, cool and dehumidify the compartment room CR in the respective states shown in FIGS. 2 through 5. In FIGS. 2 through 5, the water flowing direction in the first and the second circuits 10, 20 and the heat-transfer direction are indicated by solid arrows and broken arrows, respectively.

The following will describe the heating operation of the vehicle air conditioner with reference to FIG. 2. As shown in FIG. 2, the control device (not shown) causes an electric current to flow through the thermoelectric conversion elements 30C of the thermoelectric conversion module 3 in such a direction that the first surface 3A of the thermoelectric conversion module 3 acts as the heat releasing side and the second surface 3B as the heat absorption side, respectively. The control device causes the three-way valve 23 to be set in a first position where the passage 33A is in communication with the bypass passage 21 and the passage 33B is disconnected from the passage 33A and the bypass passage 21. The control device also operates the first and the second electric pumps P1, P2 so that water flows in the first and the second circuits 10, 20 in arrow directions, respectively. The control device causes the second electric pump P2 to be set in a third position, in other words, the control device controls the operation of the second electric pump P2 so that the water pumped by the second electric pump P2 flows in the second circuit 20 through the third, the fourth and the fifth passages 17, 18, 19 in this order. Therefore, the motor 25 and the power control unit PCU 27 are located upstream of the second heat exchanger 7 with respect to the water flowing direction in the second circuit 20. Water also flows through the bypass passage 21. Additionally, the control device operates the electric fans 9A, 13A.

Thus, the heat of water in the second heat exchanger 7 is absorbed by the second surface 3B of the thermoelectric conversion module 3, thus the water in the second heat exchanger 7 being cooled, while the heat of water in the first heat exchanger 5 is released from the first surface 3A of the thermoelectric conversion module 3, thus the water in the first heat exchanger 5 being heated by the released heat. The water in the second heat exchanger 7 has been already heated by the heat generated by the motor 25 and the power control unit PCU 27, so that the thermoelectric conversion module 3 can absorb heat efficiently from water in the second heat exchanger 7 and release the heat efficiently from the first surface 3A, accordingly. Therefore, the water in the first heat exchanger 5 can be heated with high efficiency.

The heated water in the first heat exchanger 5 flows to the first air-conditioning heat exchanger 9 through the first passage 15. The heat of the heated water is released from the first air-conditioning heat exchanger 9 thereby to heat the air in the compartment room CR. The heated air is supplied positively to the compartment room CR by the electric fan 9A for heating the compartment room CR.

Because the second air-conditioning heat exchanger 11 is bypassed by the bypass passage 21, no water in the second circuit 20 flows into the second air-conditioning heat exchanger 11.

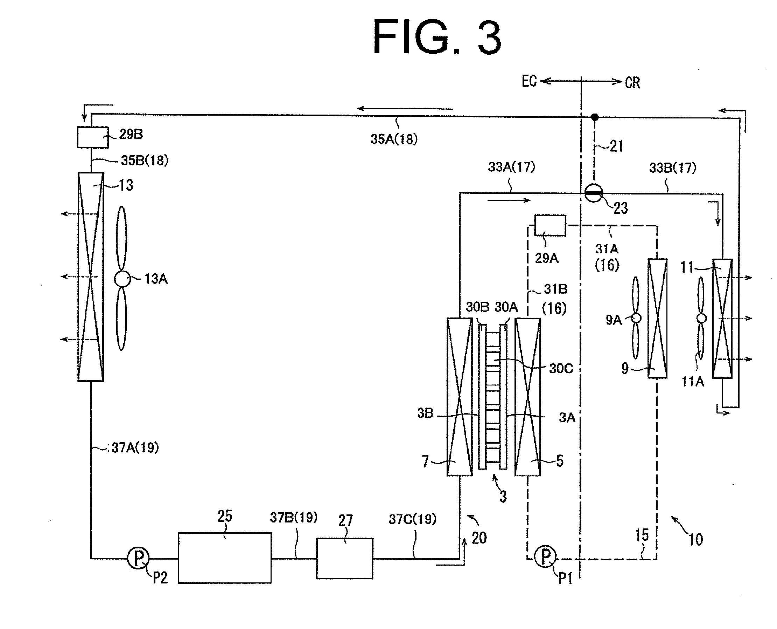

Referring to FIG. 3, there is shown another way of heating the compartment room CR. In this case, the control device causes the three-way valve 23 to be set in a second position where the passage 33A is in communication with the passage 33B and the bypass passage 21 is disconnected from the passage 33A and the passage 33B. The second electric pump P2 operates in the same way so that the water in the second circuit 20 flows in the same direction as in the case of FIG. 2 and the water in the first circuit 10 flows in arrow direction, as shown in FIG. 3. In other words, the control device causes the second electric pump P2 to be set in the third position. Additionally, the control device operates the electric fans 11A, 13A and stops the thermoelectric conversion module 3, the first electric pump P1 and the electric fan 9A.

In this case, the water that is heated by the heat generated by the motor 25 and the power control unit PCU 27 flows to the second air-conditioning heat exchanger 11 through the third passage 17 without flowing into the bypass passage 21. In the second air-conditioning heat exchanger 11, the heat of the heated water is released to air in the compartment room CR so as to heat the compartment room CR. Thus, the heated air can be supplied positively to the compartment room CR by the electric fan 11C for heating the compartment room CR.

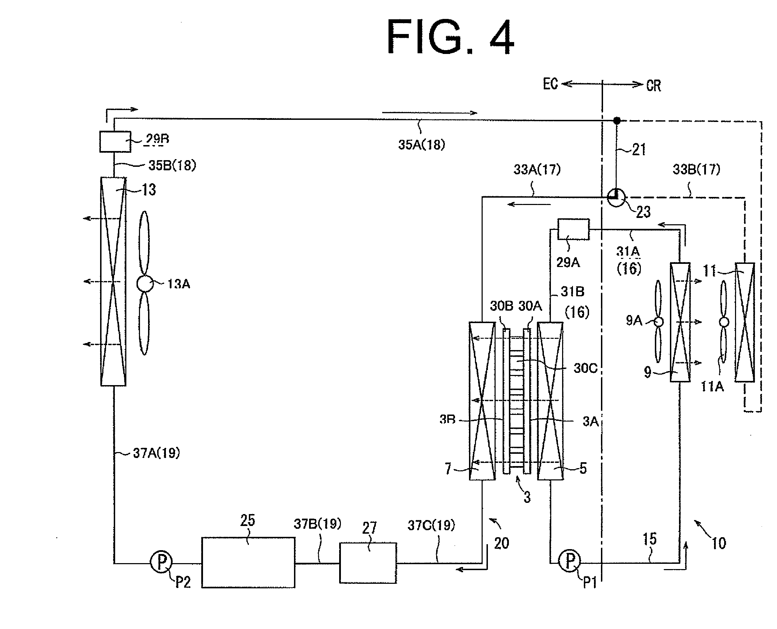

The following will describe the cooling operation of the vehicle air conditioner. As shown in FIG 4, the control device (not shown) causes an electric current to flow through the thermoelectric conversion elements 30C of the thermoelectric conversion module 3 in such a direction that the first surface 3A of the thermoelectric conversion module 3 acts as the heat absorption side and the second surface 3B as the heat releasing side, respectively. The control device causes the three-way valve 23 to be set in the first position where the passage 33A is in communication with the bypass passage 21 and the passage 33B is disconnected from the passage 33A and the bypass passage 21. The control device also operates the first and the second electric pumps P1, P2 so that water flows through the first and the second circuits 10, 20 in arrow directions, respectively. The control device causes the second electric pump P2 to be set in a fourth position, in other words, the control device controls the operation of the second electric pump P2 so that the water pumped by the second electric pump P2 flows in the second circuit 20 through the fifth, the fourth and the third passages 19, 18, 17 in this order. Therefore, the second heat exchanger 7 is located upstream of the motor 25 and the power control unit PCU 27 with respect to the water flowing direction. Water also flows through the bypass passage 21. Additionally, the control device operates the electric fans 9A, 13A.

Thus, the water in the second heat exchanger 7 is heated by the heat released from the second surface 3B of the thermoelectric conversion module 3, while the heat of water in the first heat exchanger 5 is released from the first surface 3A of the thermoelectric conversion module 3, thus the water in the first heat exchanger 5 being cooled. Since the water in the second heat exchanger 7 has not been heated by the motor 25 and the power control unit PCU 27, the thermoelectric conversion module 3 can release heat efficiently to the water in the second heat exchanger 7 and adsorb heat efficiently from the first surface 3A accordingly. Therefore, the water in the first heat exchanger 5 can be cooled sufficiently.

Cooled water in the first heat exchanger 5 flows to the first air-conditioning heat exchanger 9 through the first passage 15 thereby to cool the compartment room CR. Thus, the cooled air is supplied positively to the compartment room CR by the electric fan 9A for cooling the compartment room CR.

As in the case of heating the compartment room CR, the second air-conditioning heat exchanger 11 is bypassed by the bypass passage 21, so that no water flows through second air-conditioning heat exchanger 11. The water heated while flowing through the second heat exchanger 7 by receiving heat released from the thermoelectric conversion module 3 and further heated by the heat generated by the power control unit PCU 27 and the motor 25 is subsequently cooled in the radiator 13 by heat exchange.

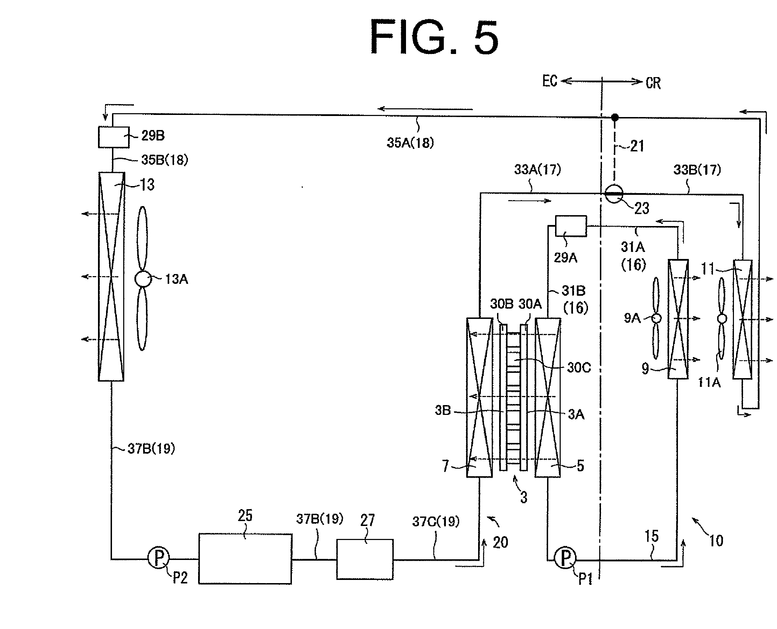

The following will describe the dehumidifying operation of the vehicle air conditioner. In the state of cooling the compartment room CR as described above, as shown in FIG. 5, the control device sets the three-way valve 23 in the second position as in the case of FIG 3 for heating so that the passage 33A is in communication with the passage 33B and that the bypass passage 21 is disconnected from the passage 33A and the passage 33B. The control device also causes the second electric pump P2 to be set in the third position. Therefore, the control device controls the discharging direction of the second electric pump P2 so that water flows through the third, the fourth and the fifth passages 17, 18, 19 in this order. Additionally, the control device operates the electric fans 11A. Thus, the water heated in the second heat exchanger 7 by the heat released from the second surface 3B of the thermoelectric conversion module 3 flows to the second air-conditioning heat exchanger 11 without flowing through the bypass passage 21.

The heat of the heated water flowing through the second air-conditioning heat exchanger 11 is released therefrom. Therefore, temperature adjustment of the air in the compartment room CR is performed in such a way that the air that has been cooled and dehumidified by the first air-conditioning heat exchanger 9 is heated by the second air-conditioning heat exchanger 11. The temperature adjusted air is supplied to the compartment room CR by the electric fans 9A, 11A, so that air in the compartment room CR can be dehumidified.

According to the vehicle air conditioner of the above-described embodiment wherein air that is dehumidified can be adjusted in temperature, the air-conditioning is hardly deteriorated when the compartment room CR is dehumidified. The compartment room CR can be dehumidified even when the first surface 3A and the second surface 3B of the thermoelectric conversion module 3 are set to the heat release side and the heat absorption side, respectively. In this case, air is cooled and dehumidified in the second air-conditioning heat exchanger 11 and heated in the first air-conditioning heat exchanger 9. Additionally, when the compartment room CR needs not be heated for dehumidification, the compartment room CR can be dehumidified only by the cooling operation of the air conditioner without using the first air-conditioning heat exchanger 9.

The reservoirs 29A, 29B function to adjust the pressure of water flowing through the respective first and the second circuits 10, 20 by using the water stored in the respective reservoirs 29A, 29B, so that water flows smoothly through the first and the second circuits 10, 20 during the heating, cooling or dehumidifying operation for the vehicle air conditioner. Therefore, the vehicle air conditioner of the present invention can improve the air-conditioning performance in the compartment room CR.

As described above, the vehicle air conditioner of the embodiment of present invention can heat, cool or dehumidify the compartment room CR by switching the direction of electric current applied to the thermoelectric conversion elements 30C of the thermoelectric conversion module 3 and also changing the water flowing direction by the three-way valve 23 and the second electric pump P2, so that the structure of the vehicle air conditioner can be simplified.

Therefore, the vehicle air conditioner of the present invention can achieve comfortable air-conditioning of the compartment room CR and also reduce the manufacturing cost of the vehicle air conditioner.

Particularly, the simplified structure of the vehicle air conditioner helps to reduce the restriction on mounting the vehicle air conditioner on a vehicle. Therefore, the degree of freedom in mounting the vehicle air conditioner on a vehicle increases. Additionally, the vehicle air conditioner can be made small because of its simple structure.

In the vehicle air conditioner according to the embodiment of the the present invention, the thermoelectric conversion module 3, the first heat exchanger 5, the second heat exchanger 7 and the radiator 13 are disposed in the engine compartment EC that is outside the compartment room CR. On the other hand, the first air-conditioning heat exchanger 9 and the second air-conditioning heat exchanger 11 are disposed in the compartment room CR. The structure of the elements of the vehicle air conditioner that are disposed in the compartment room CR is simplified, so that the structure of the vehicle air conditioner as a whole may be simplified. Therefore, the manufacturing cost of the vehicle air conditioner can be reduced and the mounting of the vehicle air conditioner on a vehicle can be facilitated.

Additionally, the motor 25 as the power source of the present invention is provided in the second circuit 20 in the embodiment. When the motor 25 is disposed upstream of the second heat exchanger 7 with respect to the flowing direction of water as the heat exchange medium in the second circuit 20, the water is heated by the heat generated by the motor 25, so that heat can be absorbed efficiently from the second surface 3B of the thermoelectric conversion module 3 through the water in the second heat exchanger 7 during heating of the compartment room CR. Therefore, heat can be released efficiently from the first surface 3A of the thermoelectric conversion module 3 thereby to heat further the water in the first heat exchanger 5, with the result that the compartment room CR can be heated more efficiently.

When the motor 25 is disposed downstream of the second heat exchanger 7 with respect to the flowing direction of the water in the second circuit 20, the water in the second heat exchanger 7 is cooled by the heat absorption from the second surface 3B of the thermoelectric conversion module 3 during heating of the compartment room CR. Therefore, the motor 25 can be cooled more efficiently.

The present invention is not limited to the above embodiment but may be variously modified within the scope of the invention, as exemplified below.

A heat storage device may be provided in the first and the second circuits 10, 20. In this case, the air-conditioning operation for heating and cooling the compartment room CR can be performed more efficiently by the heat stored in the heat storage device.

In cooling the compartment room CR, water may flow through the third passage 17, the fourth passage 18 and the fifth passage 19 arranged in this order with respect to the water flowing direction. In this case, the motor 25 and the power control unit PCU 27 are disposed upstream of the second heat exchanger 7 in the second circuit 20 with respect to the water flowing direction. In such arrangement, the motor 25 and the power control unit PCU 27 can be cooled more efficiently by water cooled by the radiator 13.

A battery such as the one mounted on a vehicle and the like may be provided in the second circuit 20.

In the embodiment, the thermoelectric conversion module 3 includes a pair of substrates. However, a skeleton-type thermoelectric conversion module without substrates may be used.

In the embodiment, water serves as the heat exchange medium. However, gas such as air may serve as the heat exchange medium.

The present invention can be applied to a vehicle driven by a motor, an engine or a combination of an engine and a battery.

A vehicle air conditioner includes a thermoelectric conversion module, a first heat exchanger, a second heat exchanger, a first air-conditioning heat exchanger, a second air-conditioning heat exchanger, a radiator, a first circuit connecting the first heat exchanger and the first air-conditioning heat exchanger and a second circuit connecting the second heat exchanger, the second air-conditioning heat exchanger and the radiator. The second circuit includes a bypass passage that bypasses the second air-conditioning heat exchanger and a first switching device switching selectively between a first position where heat exchange medium flows through the bypass passage without allowing the heat exchange medium to flow through the second air-conditioning heat exchanger and a second position where the heat exchange medium flows through the second air-conditioning heat exchanger.

## Claims

1. A vehicle air conditioner comprising:
a thermoelectric conversion module (3) including a thermoelectric conversion element (30C), wherein flowing direction of electric current applied to the thermoelectric conversion element (30C) can be controllably reversed, the thermoelectric conversion module (3) further including a first surface (3A) and a second surface (3B),
a first heat exchanger (5) provided on the first surface (3A) side;
a second heat exchanger (7) provided on the second surface (3B) side;
a first air-conditioning heat exchanger (9);
a second air-conditioning heat exchanger (11); and
a radiator (13), **characterized in that** the vehicle air conditioner further comprising:
a first circuit (10) connecting the first heat exchanger (5) and the first air-conditioning heat exchanger (9); and
a second circuit (20) connecting the second heat exchanger (7), the second air-conditioning heat exchanger (11) and the radiator (13), wherein the first circuit (10) including:
a first passage (15) extending from the first heat exchanger (5) to the first air-conditioning heat exchanger (9); and
a second passage (16) extending from the first air-conditioning heat exchanger (9) to the first heat exchanger (5), wherein heat exchange medium flows through the second circuit (20), wherein the second circuit (20) includes:
a third passage (17) extending from the second heat exchanger (7) to the second air-conditioning heat exchanger (11);
a fourth passage (18) extending from the second air-conditioning heat exchanger (11) to the radiator (13);
a fifth passage (19) extending from the radiator (13) to the second heat exchanger (7);
a bypass passage (21) connecting the third passage (17) and the fourth passage (18), and
a first switching device (23) switching selectively between a first position where the heat exchange medium flows through the bypass passage (21) that bypasses the second air-conditioning heat exchanger (11) and a second position where the heat exchange medium flows through the second air-conditioning heat exchanger (11).

2. The vehicle air conditioner according to claim 1, **characterized in that** the vehicle air conditioner further comprising:
a power source driving a vehicle and provided in the second circuit (20).

3. The vehicle air conditioner according to claim 2, **characterized in that** the second circuit (20) further including:
a second switching device (P2) switching selectively between a third position where the heat exchange medium flows through the third passage (17), the fourth passage (18) and the fifth passage (19) in this order and a fourth position where the heat exchange medium flows through the fifth passage (19), the fourth passage (18) and the third passage (17) in this order.

4. The vehicle air conditioner according to any one of claims 1 through 3, **characterized in that** the thermoelectric conversion module (3), the first heat exchanger (5), the second heat exchanger (7) and the radiator (13) are disposed outside a compartment room (CR) of a vehicle, wherein the first air-conditioning heat exchanger (9) and the second air-conditioning heat exchanger (11) are disposed in the compartment room (CR).

5. The vehicle air conditioner according to claim 1, **characterized in that** the first switching device (23) is a three-way valve (23) and disposed at a connection between the bypass passage (21) and the third passage (17) or between the bypass passage (21) and the fourth passage (18).

6. The vehicle air conditioner according to claim 3, **characterized in that** the second switching device (P2) is an electric pump (P2) and disposed in the second circuit (20).
